# EUROPEAN PATENT SPECIFICATION

(11) **EP 0 473 357 B1**
(45) Date of publication and mention of the grant of the patent: **22.05.1996**
(21) Application number: 91307707.9
(22) Date of filing: 21.08.1991
(51) Int. Cl.: B63B 3/00, B63H 21/30

(54) **Module frames**
Modulärer Rahmen
Châssis modulaire

(30) Priority: 21.08.1990 JP 218160/90; 26.10.1990 JP 289678/90; 26.10.1990 JP 112285/90; 30.10.1990 JP 292444/90; 31.10.1990 JP 294127/90
(43) Date of publication of application: 04.03.1992
(73) Proprietor: ISHIKAWAJIMA-HARIMA JUKOGYO KABUSHIKI KAISHA, Tokyo-to 101 (JP)
(72) Inventor: Imashimizu, Yoshinori, Kure-shi, Hiroshima-ken 737 (JP); Yamamoto, Shuichi, Kure-shi, Hiroshima-ken 737 (JP); Maeyama, Kaoru, Kure-shi, Hiroshima-ken 737 (JP); Suda, Yoshiaki, Kure-shi, Hiroshima-ken 737 (JP); Takada, Toshiyuki, Toyota-gun, Hiroshima-ken 729-25 (JP); Hiramoto, Etsuro, Aki-gun, Hiroshima-ken 737-12 (JP); Oki, Toshihide, Kure-shi, Hiroshima-ken 737-01 (JP); Morita, Sadayuki, Ako-gun, Hyogo-ken 678-12 (JP); Kawatani, Shoji, Kure-shi, Hiroshima-ken 737 (JP); Morioka, Kunihito, Kure-shi, Hiroshima-ken 737-01 (JP); Fujimitsu, Ryoichi, Kure-shi, Hiroshima-ken 737 (JP); Handa, Kasuhisa, Kure-shi, Hiroshima-ken 737-01 (JP)
(74) Representative: Jennings, Nigel Robin

(56) References cited:
- GB-A- 1 016 790
- GB-A- 2 161 773
- US-A- 2 902 247
- US-A- 3 363 597
- US-A- 3 543 951
- US-A- 4 805 859

## Description

The present invention relates to a method of assembling a module frame adapted to form part of a larger structure, such as an engine room of a large ship, on which fittings are mounted, and to a modular structure comprising a plurality of such module frames connected together.

An engine room of a ship has a wide variety of fittings, such as machinery, piping and wiring installed in and fixed to the hull. Normally, the deck of the hull is built and then fittings are brought onto or below the deck or into the hull for their installation and fixing on or below the deck.

This conventional system necessitates many inboard installation and fixing operations which are carried out under poor environmental conditions which means that their efficiency is low and the time taken to complete them tends to be relatively long. The inboard installation and fixing operations necessitate frequent adjustments whilst they are being performed due to dimensional errors, which further lowers the working efficiency.

In order to overcome these problems, it has been proposed that the fittings be divided into a plurality of blocks which are mounted on a module frame or frames in a factory. The blocks are then moved into the ship together with the module frame(s) for installation. One or more further module frames with other fittings are then moved into position and connected to the module frame(s) already in position and the fittings carried by them are also connected together, as appropriate.

This proposed method would drastically reduce the onboard operations and shorten the period required for installation and fixing since only the module frames manufactured on shore with fittings mounted thereon need to be brought onboard and connected together.

However, the proposed method has been regarded as impractical. This is due to the fact that module frames are very large and are assembled rigidly by welding or the like to enable them to support heavy loads or objects so that it is very difficult to maintain the dimensional accuracy of the module frames against dimensional errors of materials or welding distortion. If the dimensional accuracy is not maintained, an extra operation is required to adjust the module frames and/or fittings with respect to one another in the course of installation in the ship. Such adjustment requires much time and labour and hinders improvement of working efficiency.

GB-A-2161773 discloses a propulsion module which is housed in a box frame which is connected via connections to a ship's hull or deck. The connections include connector brackets attached to the box frame which are connected to mountings connected to the ship. Misalignment of the engine with the propellor shaft is compensated for by an axial radial compensation joint.

US-A-4682765 discloses a welding jig for use in the manufacture of a metal grating. The jig comprises a rectangular frame which is traversed by two spaced parallel support bars, each of which carries a plurality of pivotally mounted cams. Each cam is connected to be rotated by a respective bar and all the bars associated with each of the support bars are pivotally connected to a respective common drive bar which is arranged to be moved longitudinally by a respective actuator. In use, grating bars are positioned on the jig adjacent the cams and the actuators operated to move the grating bars into predetermined positions relative to one another. End bars are then welded to the ends of the grating bars.

It is therefore an object of the present invention to provide a method of assembling a module frame adapted to form part of a larger modular structure which enables the module frame to be manufactured highly accurately by welding and to be subsequently installed highly accurately without needing any adjustment, the module frame then being capable of carrying relatively large and heavy fittings.

According to one aspect of the present invention there is provided a method of assembling a module frame for assembly as part of a larger structure with a generally flat shape, the module frame comprising a pair of horizontal and parallel main beams, a pair of beam members connected to and extending between the main beams and a connector connected to at least one end of each main beam and/or each beam member, the method comprising supporting the components of the module frame, whilst welded together, on a support device in a predetermined position, retaining two or more connectors on respective connector support brackets forming part of the support device, positioning the connector support brackets so that they are in predetermined positions with respect to one another adjacent respective ends of the said components and welding the connectors to the said ends.

According to a further aspect of the present invention there is provided a method of assembling a module frame for assembly as part of a larger structure of three-dimensional shape on which fittings are to be mounted, the module frame comprising a pair of horizontal and parallel main beams, a pair of beam members connected to and extending between the main beams, a support column extending vertically from each junction of the main beams with the beam members and a connector connected to at least one end of each main beam and/or each beam member and/or each support column, the method comprising supporting the components of the module frame, whilst welded together, on a support device in a predetermined position, retaining two or more connectors on respective connector support brackets forming part of the support device, positioning the connector support brackets so that they are in predetermined positions with respect to one another adjacent respective ends of the said components and welding the connectors to the said ends.

According to yet a further aspect of the present invention there is provided a method of assembling a module frame for assembly as part of a larger structure of three-dimensional shape on which fittings are to be mounted, the module frame comprising a horizontal and substantially rectangular floor member, a support column extending vertically from each corner of the floor member and a connector connected to at least one end of each support column, the method comprising supporting the components of the module frame, whilst welded together, on a support device in a predetermined position, retaining two or more connectors on respective connector support brackets forming part of the support device, positioning the connector support brackets so that they are in predetermined positions with respect to one another adjacent respective ends of the support columns and welding the connectors to the said ends.

Thus the module frames manufactured by the method of the present invention include at least two connectors and preferably include a connector on the or each free end of each main beam, each beam member and, if present, each support column. During manufacture the position of the connectors is precisely fixed with respect to the remainder of the module frame and with respect to predetermined spatial coordinates defined by an assembly device and subsequently connected to the remainder of the module frame. Two or more module frames may then be connected together by means of their connectors and fittings carried by them will then automatically be in a precisely predetermined spatial relationship due to the precise prepositioning of the connectors.

In practice, the main beams and beam members and support columns or the floor member and support columns are likely to be welded together as a first step and the connector or connectors then welded to the module frame subsequently.

As mentioned above, each free end of each main beam, each beam member and each support column may have a connector connected to it. Whilst this will be the case in connection with a module frame which is to be in the middle of the assembled larger modular structure, it will not necessarily be the case in connection with a module frame which is to be at the outer edge of the final modular structure. However, at this outer edge the modular structure will need to be connected to the larger structure in which it is to be accommodated, such as a ship's engine room, and for this purpose a coupler is required. This coupler may comprise two elbow plates connected to the frame module and the larger structure, respectively, and two further plates connected to opposite sides of the elbow plates by bolts which pass through holes, at least some of which may be in the form of elongate slots to permit some positional adjustment to be effected.

Further features and details of the invention will be apparent from the following description of certain specific embodiments which is given by way of example with reference to the accompanying drawings, in which:-
Fig. 1 is a perspective view of a first embodiment of a module frame assembled according to the present invention;
Fig. 2 is a side view thereof;
Fig. 3 is a plan view of a device for assembling a module frame as shown in Fig. 1;
Fig. 4 is a sectional view on the line IV-IV in Fig. 3;
Fig. 5 is an enlarged view of part of Fig. 4;
Fig. 6 is a view in the direction of the arrow VI in Fig. 5;
Fig. 7 is a view in the direction of the arrow VII in Fig. 5;
Fig. 8 is a view in the direction of the arrows VIII-VIII in Fig. 3;
Fig. 9 is a view in the direction of the arrows IX-IX in Fig. 3;
Figs. 10 to 16 are views showing the first to seventh steps, respectively of assembling a module frame by use of the assembling device of Fig. 3;
Fig. 17 is a perspective view of a module assembly which is a combination of two or more module frames as shown in Fig. 1;
Fig. 18 is a perspective view showing the module assembly of Fig. 17 installed in a larger structure;
Fig. 19 is an enlarged view of part of Fig. 18;
Fig. 20 is an enlarged side view of the coupler seen in Fig. 19;
Fig. 21 is a sectional view on the line XXI-XXI in Fig. 20;
Fig. 22 is a perspective view showing a second embodiment of module frame manufactured according to the present invention; and
Figs. 23 to 30 are perspective views showing the third to tenth embodiments respectively of module frame manufactured according to the present invention;

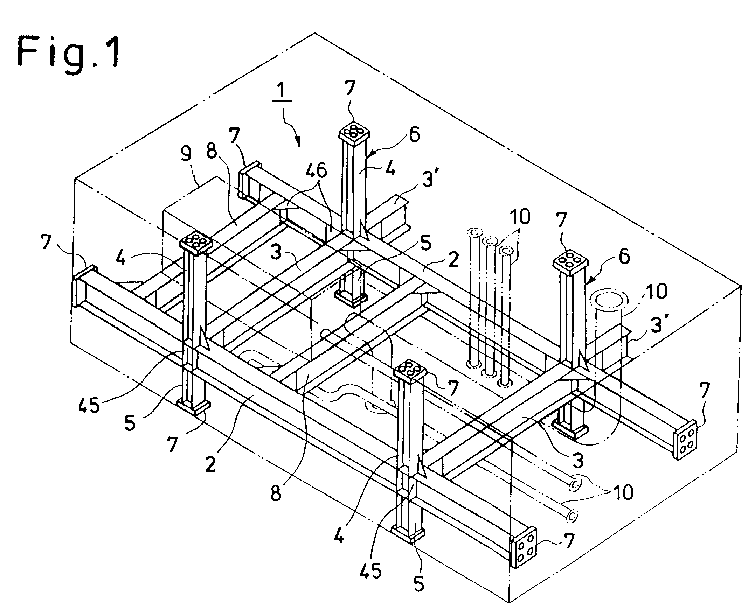

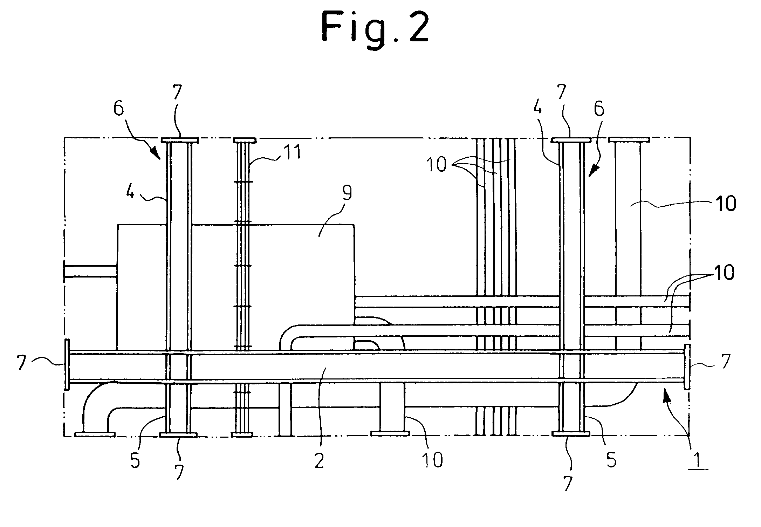

Figs. 1 and 2 show a typical basic form of module frame 1 manufactured according to the present invention which comprises a pair of horizontal, parallel main beams 2, a pair of horizontal, parallel beam members 3 extending perpendicular to and between the main beams 2 and rigidly welded at their opposite ends to the main beams 2 and four support columns 6 each having upper and lower column portions 4 and 5 rigidly welded to and extending vertically from a respective junction of the main beams 2 with the beam members 3.

A flanged connector 7 is rigidly welded in position at a predetermined position, the connector-mounting position, or on each end of each column 6 and main beam 2.

In the figures, reference numeral 8 represents an auxiliary beam added to support fittings such as heavy machinery 9; 3, extensions for connecting the module frame 1 to a stationary member of a hull structure, such as a bulkhead, when the module frame 1 is installed in a ship; 45, reinforcement ribs; and 46, reinforcement brackets.

The module frame 1 is assembled so that its width, length and height concur with a high accuracy with the size of a hexahedral container shown in phantom lines.

In addition to the machinery 9, the module frame 1 has fittings, such as piping 10 and wiring 11, mounted on it.

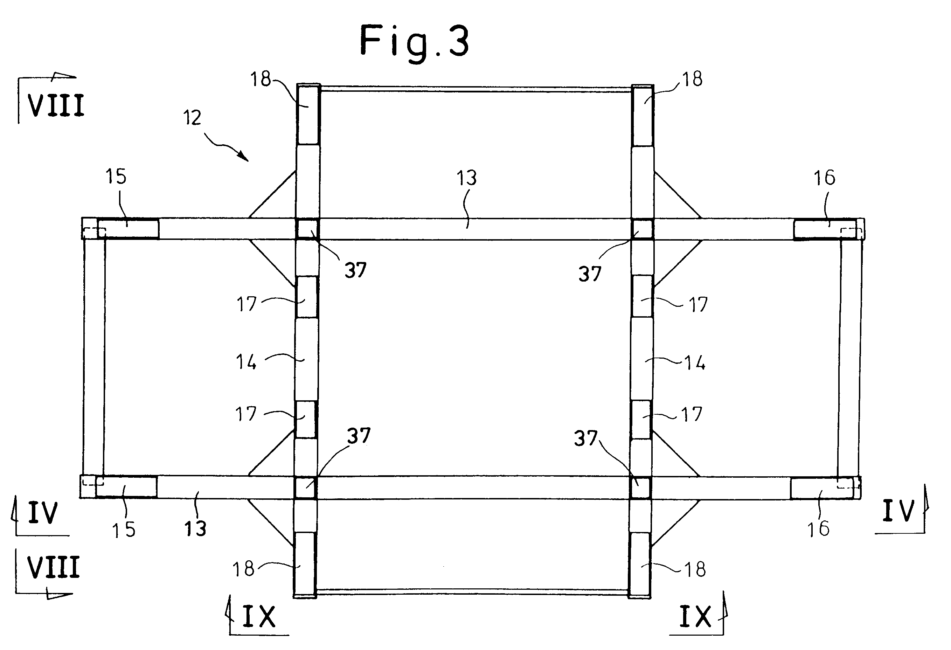

The module frame 1 may be assembled with the aid of the device 12 shown in Figs. 3 to 9.

As shown in Fig. 3, a pair of parallel, longitudinal frames 13 having the same spacing as that of the main beams 2 of the module frame 1 and longer than the beams 2 are connected to a pair of lateral frames 14 extending perpendicular to the longitudinal frames 13 and having the same spacing as that of the beam members 3 of the module frame 1. Fixed side positioning means 15 are mounted on one end of each longitudinal frame 13 to position the main beams 2 in the longitudinal, lateral and vertical directions and moving side positioning means 16 are mounted on the other ends of the frames 13.

Beam supports 17 are mounted on the upper surfaces of the lateral frames 14 between the longitudinal frames 13 and have the same height as that of the lower column portions 5 of the module frame 1. An upper positioning bases 18 having substantially the same height as that of the upper column portions 4 of the module frame 1 are fixed at each end of the lateral frames 14.

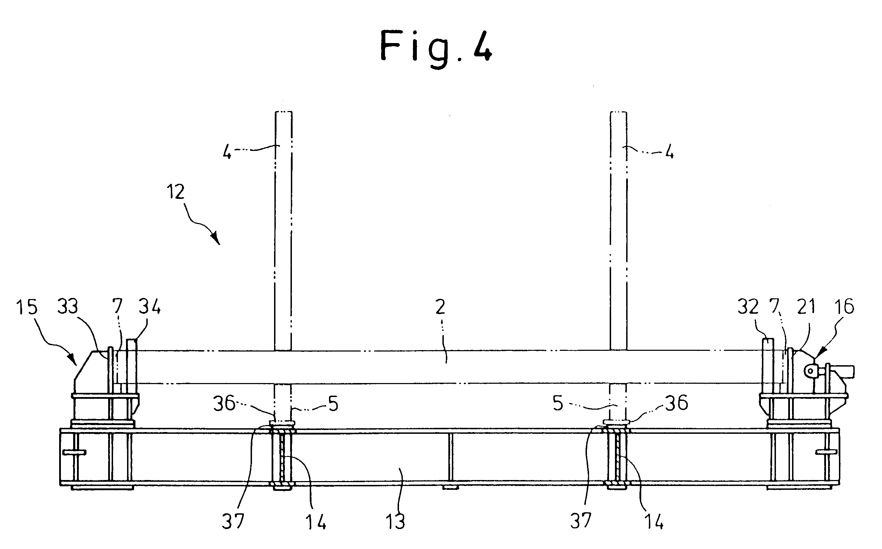

As shown in Figs. 4, 5 and 6 in detail, the moving side positioning means 16 comprises a movable base 22 which is movable by liner rollers 20 or the like along the length of the longitudinal frames 13 and which has a connector support bracket 21 thereon for lateral positioning of the associated beam member 2. The base 22 and the support bracket 21 are movable by a cylinder 23.

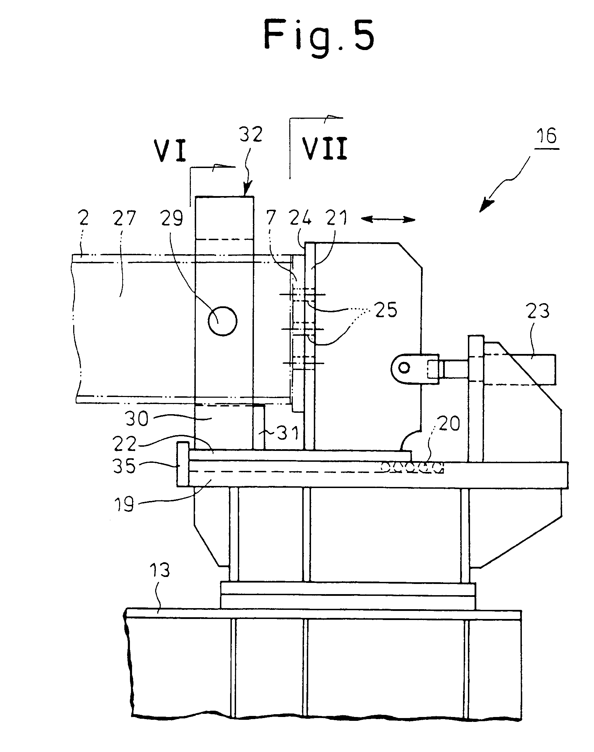

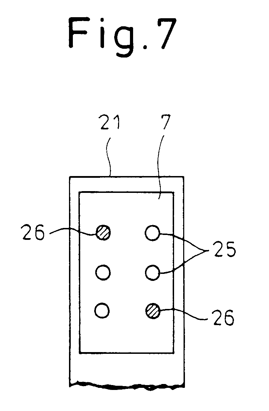

The support bracket 21 has an inner surface 24 (see Fig. 5) to which the flanged connector 7 is fixed with high positional accuracy and for example, as shown in Fig. 7, reamer pins 26 are inserted into two opposed through holes 25 and bolts and nuts (not shown) are used for connecting through the other holes 25.

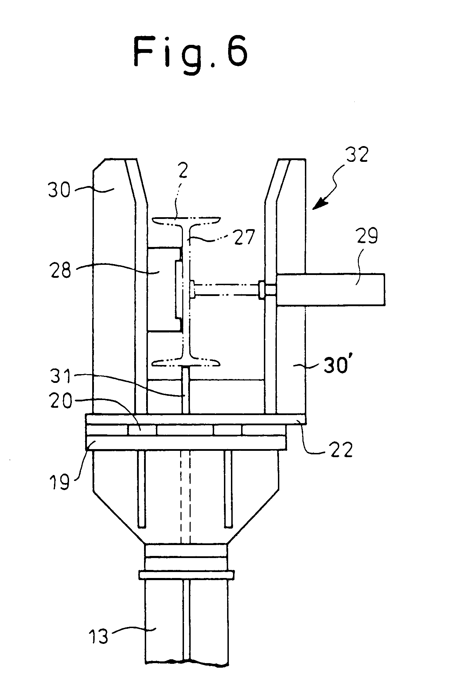

The movable base 22 has a main-beam positioning base 32 at a position inside the support bracket 21. As shown in Fig. 6, the positioning base 32 has a guide member 30 with a positioning block 28 for engaging at two vertically spaced positions one side surface of a vertical web 27 of the I-shaped main beam 2 for longitudinal and lateral positioning of the main beam 2, a guide member 30′ with a pushing cylinder 29 for pushing the other side surface of the web 27 towards the positioning block 28 and a height positioning plate 31 for supporting the vertical web 27 so that the lower surface of the main beam 2 is coplanar with the tops of the lower column portions 5.

The moving side positioning means 16 has a stationary base 19 whose inner end has a positioning stop 35 which the movable base 22 may engage so that the spacing between the support bracket 21 and a support bracket 33 on the fixed side positioning means (see Fig. 4) can be maintained constant with high accuracy.

The fixed side positioning means 15 has, as shown in Fig. 4, a connector 33 and a main-beam positioning base 34 which are of the same arrangement and of the same height as those of the support bracket 21 and the positioning base 32 of the moving side positioning means 16.

Each of the junctions of the longitudinal frames 13 with the lateral frames 14 has at its upper surface a support bracket 37 which has the same structure as that of the support bracket 21 as shown in Fig. 7 to effect positioning through tightening of a flanged connector 36 rigidly attached to the lower end of the lower column portion 5.

The upper positioning base 18 has at its top a guide member 39 with a frustoconical guide hole 38. An upper guide bar 41 with frustoconical guide projections 40 on the lower surface of its ends extends over the bases 18 and engage with the latter by engagement of the projections 40 into the holes 38 thereby maintaining the height of the guide bar 41 constant. Upper positioning means 42 is thus provided.

The upper guide bar 41 has on its bottom surface support brackets 43 which are vertically aligned with the support brackets 37 and have the same structure as that of the latter so as to fix the connectors 7 on the tops of the upper column portions 4 in position. The upper guide bar 41 has suspension hooks 44 on its upper surface.

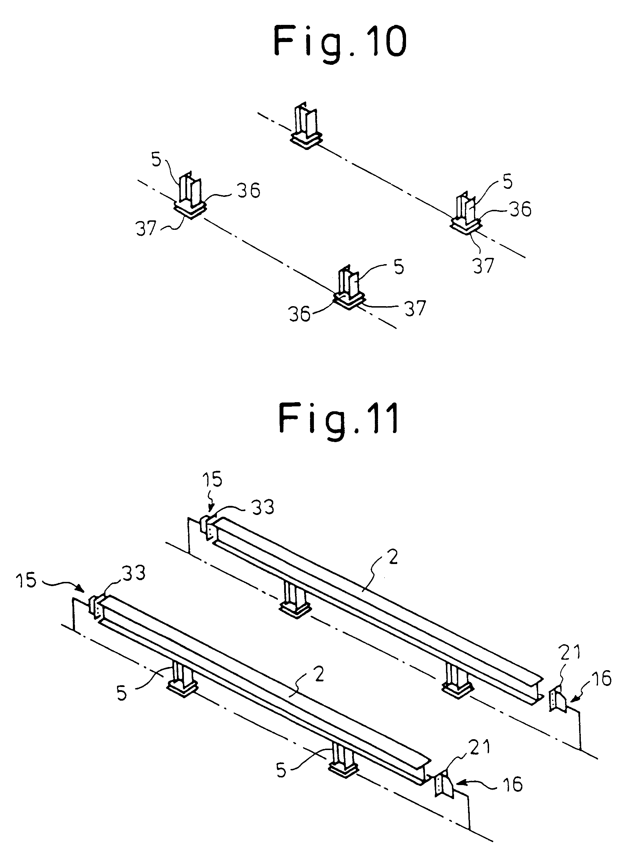

The method of assembly of the module frame 1 will now be described with reference to Figs. 10 to 16 and Figs. 3 to 9.

Firstly, as shown in Fig. 10, the lower column supports 5 are positioned and secured by the flanges 36 to the support brackets 37 at the junctions of the longitudinal frames 13 with the lateral frames 14.

As shown in Fig. 11, the connectors 7 are positioned and mounted on the support brackets 21 and 33 of the fixed and moving side positioning means 15 and 16 by means of the reamer pins 26 (Fig. 7). Then, each of the main beams 2 is positioned on the main beam positioning bases 32 and 34. Each movable base 22 is moved forward to abut on the positioning stop 35, so that the associated connector 7 is positioned with respect to the length of the module frame 1. The positioning in the longitudinal and lateral directions is performed by the guide member 30 and the pushing cylinder 29 of the main beam positioning bases 32 and 34 and the height positioning is effected by the height positioning plate 31.

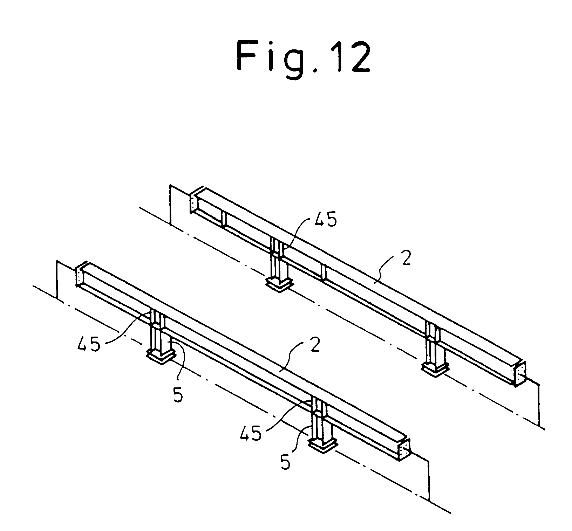

Next, as shown in Fig. 12, the reinforcement ribs 45 are attached by welding at the required points on the main beam 2.

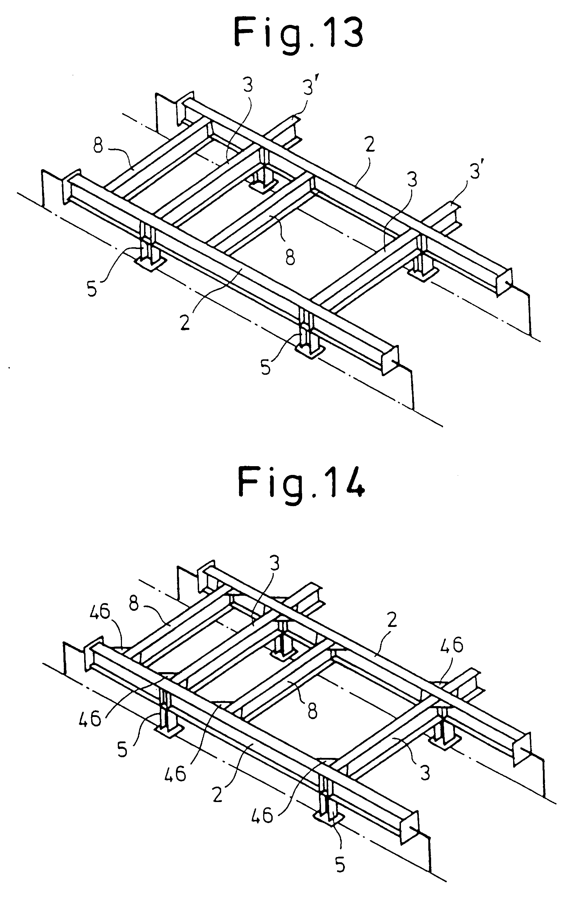

Then, as shown in Fig. 13, the beam members 3 and the auxiliary beams 8 are mounted between the main beams 2 and the extensions 3′ are mounted on the outer side by welding. As shown in Fig. 14, the brackets 46 are welded on for reinforcement.

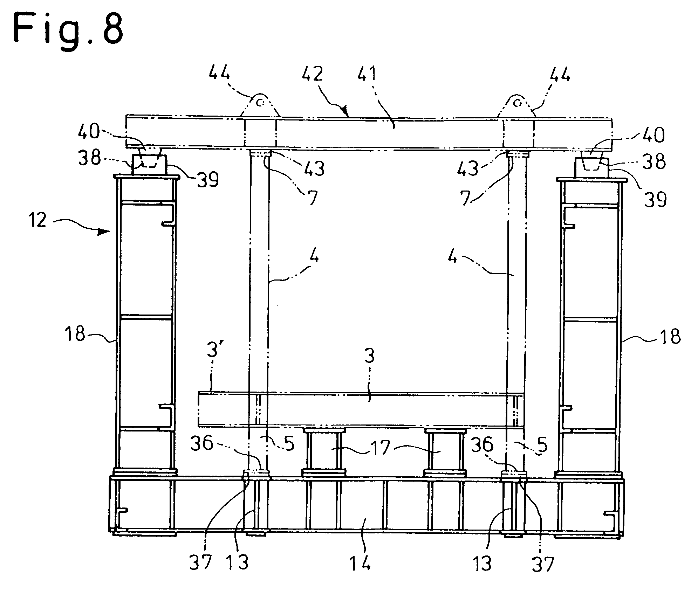

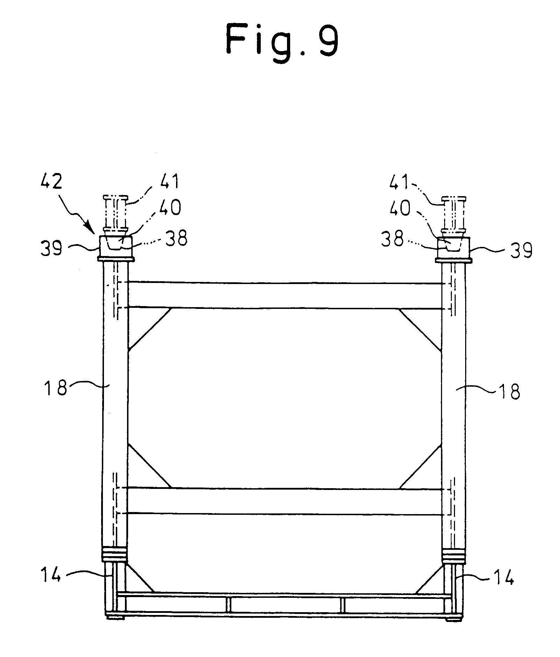

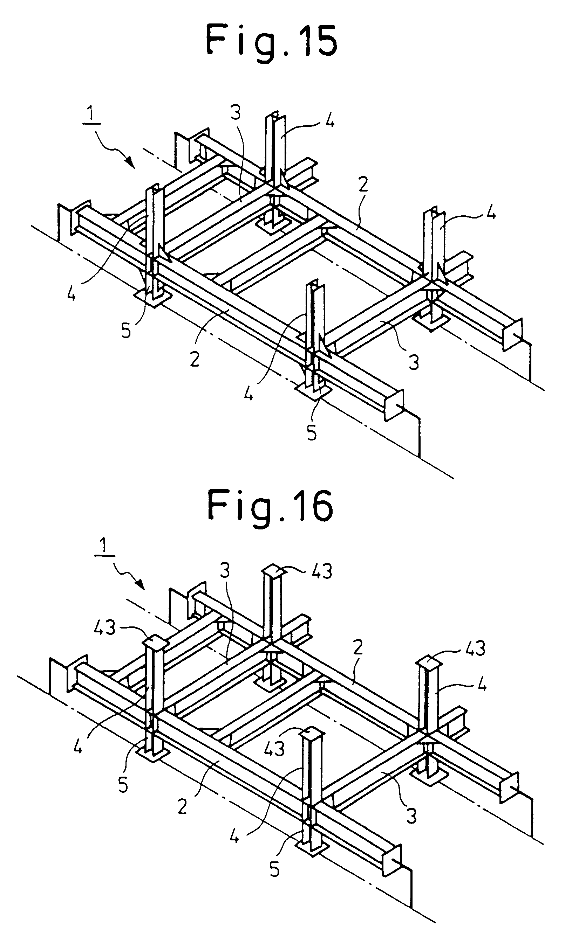

As shown in Figs. 8 and 9, the upper guide bars 41 with the support brackets 43 mounted at predetermined positions thereon are placed on the upper positioning bases 18 such that the guide projections 40 of the former are engaged in the guide holes 38 of the latter. The upper column portion 4 is erected on each of the junctions of the main beams 2 and beam members 3, as shown in Fig. 15, and its positions adjusted such that the upper end of the portion 4 is aligned with the corresponding support bracket 43 and then is rigidly welded at its lower end to the corresponding junction.

After the welding any welding distortion is eliminated by restraining each portion until the welded portions have cooled down.

Next, as shown in Fig. 16, the upper ends of the lower column portions 5 whose position is fixed, are connected to the main beams 2. Each end of the main beams 2 and the upper ends of the upper column portions 4 are welded and thus connected to the connectors 7, whose position is fixed, and welding distortion is eliminated by the same procedure as described above. In this connection, the lower column portions 5 may be regarded as being integral with the associated connectors 7 since they are of short length and are thus subject to less welding distortion.

By the above procedure, a module frame 1 can be assembled with high accuracy.

It is advisable that the components such as the main beams 2, beam members 3 and upper and lower column portions 4 and 5 for forming the module frame 1 are accurately prepared in advance by cutting and the like to be slightly undersized, e.g. by 0 to -2 mm, relative to the specified final size.

It is also advisable to weld the main beams 2, beam members 3 and upper column portions 4 at a different place and to use the assembling device 12 of the present invention only for welding them to the connectors 7. The main beams 2, beam members 3 and support columns 6 should have sufficient rigidity to support the weight of machinery to be installed on them and also to be substantially resistant to vibration. Though I-shaped beams are used in the above embodiment, H-shaped, grooved, rectangular or round shape beams or composite materials may be used instead.

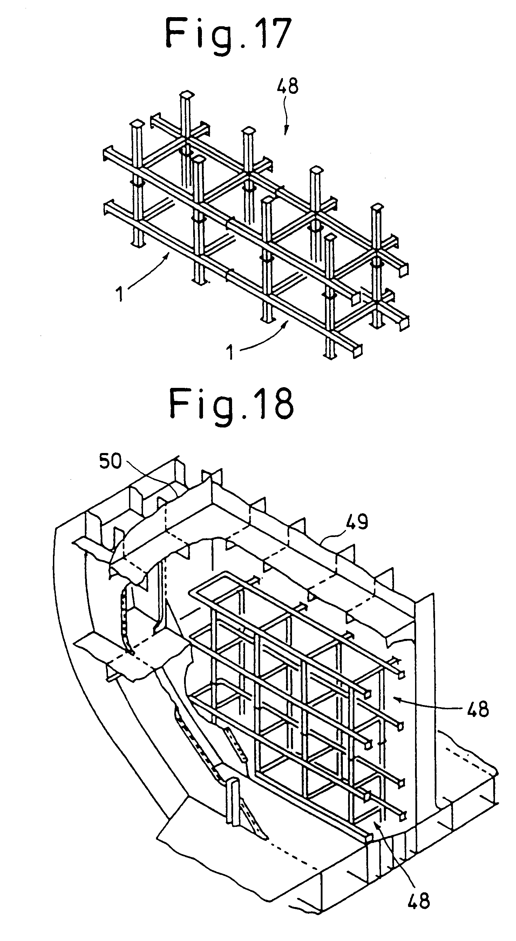

When the module frame 1 thus formed is used for fitting out a large structure, such as the engine room of a large ship, several module frames carrying machinery 9, piping 10, wiring 11, etc., as shown in Fig. 1, are assembled together on a base by bolt-connecting the connectors 7 and by connecting the piping 10 and wiring so as to form a module frame assembly 48 in which all or part of the fittings which are functionally related to each other are present and which has a size installable in the hull (see Fig. 17).

Such a module frame assembly 48 is prepared for each function, and each of these assemblies 48 is installed and arranged three-dimensionally at a predetermined position in the engine room. As shown in Fig. 18, a connection is effected between the engine room floor and the assemblies 48, between each of these assemblies 48 as well as between the assemblies 48 and a transverse bulkhead 49 or a longitudinal bulkhead 50 of the engine room.

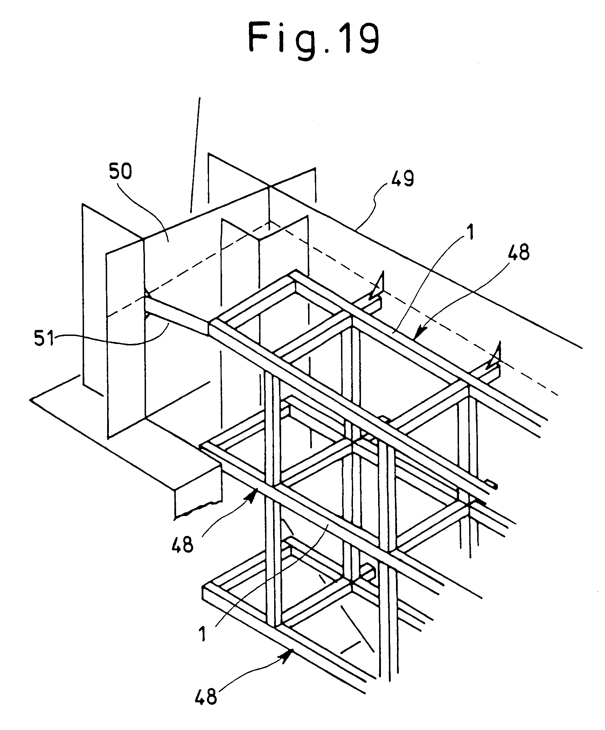

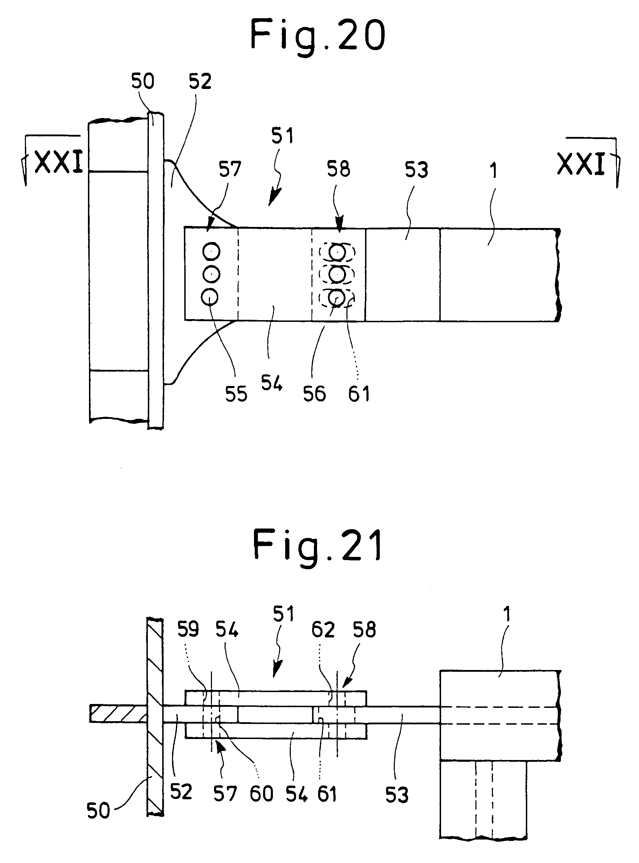

As shown in Figs. 19 to 21, a coupler 51 for coupling the module frame 1 to the longitudinal bulkhead 50 comprises two plates 54 which sandwich two elbow plates 52 and 53, fixed respectively to the bulkhead 50 and the module frame 1 from opposite sides and are connected to them by bolts 55 and 56. Some of the bolt holes 59, 60, 61 and 62 in the bolt-tightened portions 57 and 58 are in the form of a slot whose length extends in the direction of the length of the plates 52, 53. In Fig. 20 the holes 61 are shown as being slots by dotted lines.

The module frame 1 described above is designed in container size (size for containerization) and is easy to transport. Accordingly, the work to install or mount various types of machinery 9 can be carried out at a remote place with a better working environment than the ship's engine room. Since the fittings can be functionally divided and installed on different module frames according to their function, it is possible to improve the accuracy of installing or mounting fittings on the module frames and to standardize the module frame work assembly 48. Further, it is possible to have an efficient three-dimensional arrangement effectively utilizing the space available since the module frame 1 is designed as a three-dimensional structure of the form of "#". Moreover, such module frames 1 can be easily connected together with high accuracy since they have fewer points to be connected as compared to box type structures.

Connection of the module frame 1 to the longitudinal bulkhead 50 by the coupling 51 described above is advantageous in that, when rapid oscillation or vibration occurs on a ship and an excessive load is applied to the bolt-tightened portions 57 and 58, the application of excessive force to the module frame 1 is prevented by relative sliding motion between the plates 53 and 54 or the plates 53 and 52 due to the provision of the above-mentioned slot holes on the bolt-tightened portion 57 and 58. Thus, no excessive force is applied to the module frame 1 and no high external force is applied to the fittings installed on the module frame 1, which contributes to the safety of the assembly 48.

Slots may be provided for any of the bolts 59 to 62.

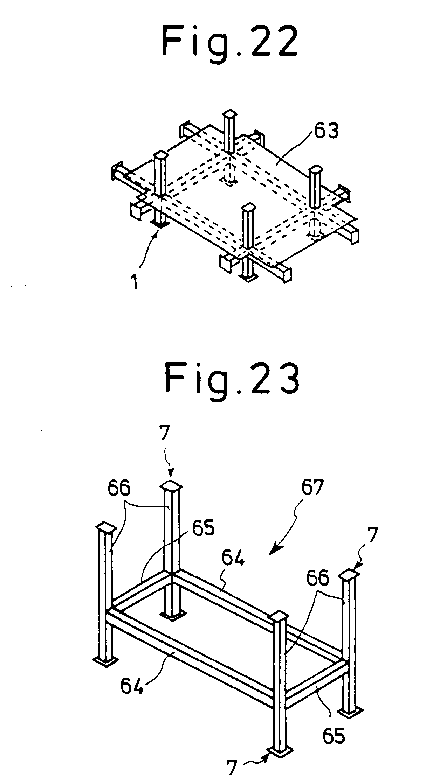

Fig. 22 shows a second embodiment of the module frame according to the present invention which is substantially the same as the first embodiment except for the provision of an additional floor 63 and therefore achieves the same effects and advantages as those of the first embodiment.

Fig. 23 represents a third embodiment of the module frame according to the present invention in which a module frame 67 is formed by assembling main beams 64 and beam members 65 to product a rectangular shape. Support columns 66 are connected to the four apexes of the rectangle.

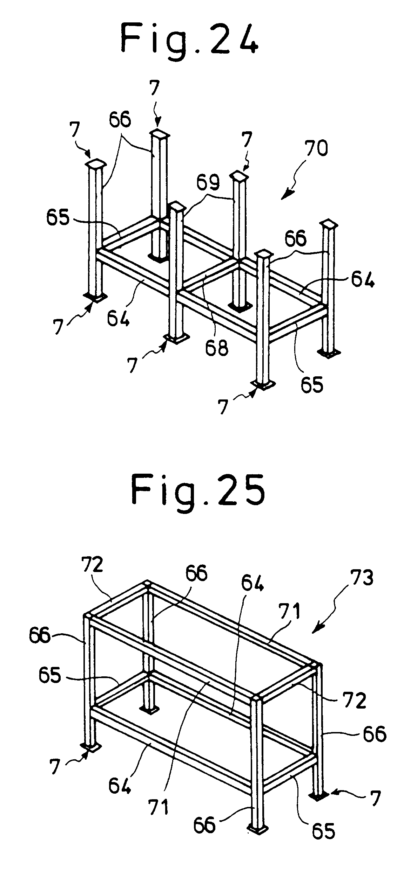

Fig. 24 shows a fourth embodiment which is similar to the third embodiment except that the module frame 70 has an intermediate transverse beam member 68 and intermediate support columns 69 at the central portion of the main beams 64.

Fig. 25 shows a fifth embodiment which is substantially the same as the second embodiment except that the module frame 73 also has upper main beams 71 and upper beam members 72.

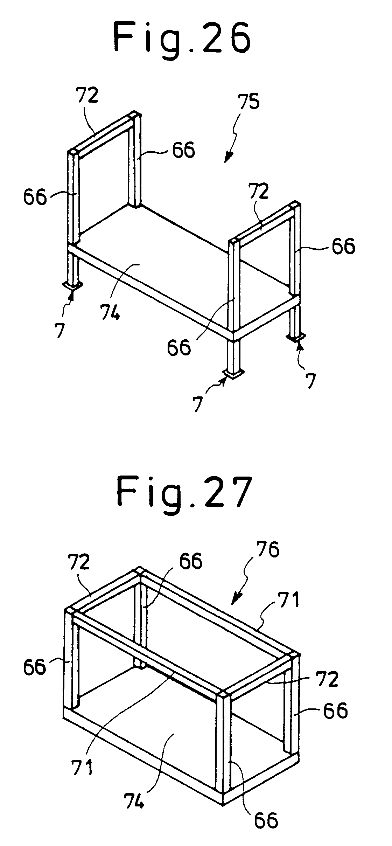

Fig. 26 shows a sixth embodiment in which the module frame 75 comprises a rectangular floor member 74, support columns 66 connected at a point between their ends to respective apexes of the floor member 74 and upper beam members 72 connecting the upper ends of the support columns 66.

Fig. 27 shows a seventh embodiment in which the module frame 76 comprises a rectangular floor member 74, support columns 66 connected at their lower ends to the apexes of the floor member 74, and upper main beams 71 and upper beam members 72 transverse thereto to the connected upper ends of the support columns 66.

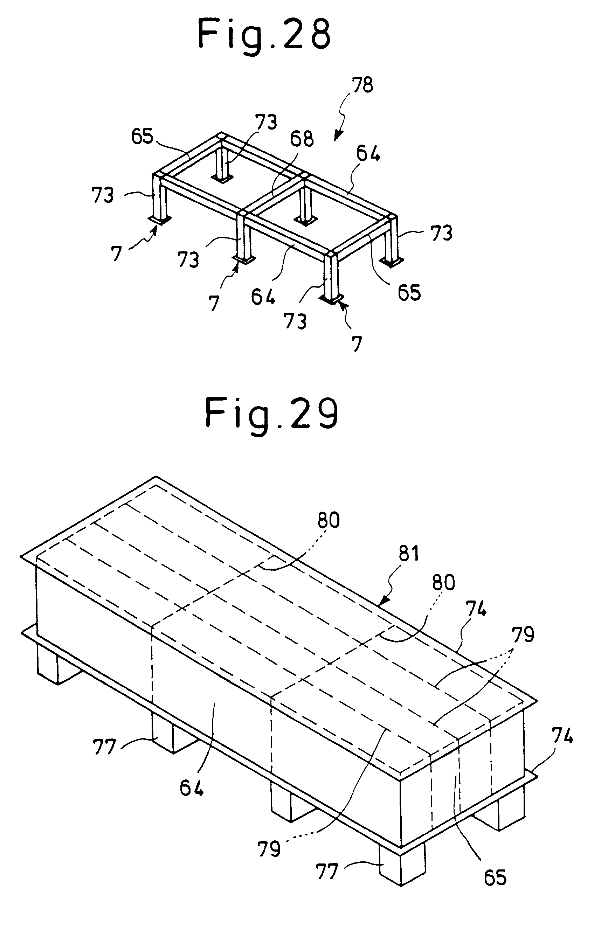

Fig. 28 shows an eighth embodiment which is substantially the same as the fourth embodiment except that the module frame 78 includes lower support columns 73 in place of the columns 66 and 69. This embodiment is especially suitable for arrangement at the uppermost or lowermost position of a larger modular structure.

Fig. 29 shows a ninth embodiment in which the module frame 81 comprises main beams 64, beam members 65, auxiliary crossbeams 79 and beams 80 inside the parts 64 and 65, upper and lower floor members 74 and lower support columns 77 on the lower floor member 74.

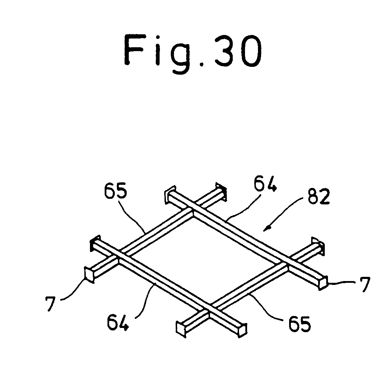

Fig. 30 shows a tenth embodiment which is essentially two-dimensional. The module frame 82 is composed only of main beams 64 and beam members 65.

The second to tenth embodiments all achieve substantially the same effects and advantages as the first embodiment.

In the embodiments described above, the module frames 1, 67, 70, 73, 75, 78, 81 and 82 are interconnected by bolt-connecting the mutually abutting connectors 7.

In the above description the module frames are designed of container size. However, this is not essential and they may be of any size. Also, the embodiments have been described for application to ships; however, the present invention may be applied also to the manufacture of modules for all types of mechanical plant including other marine structures or land structures.

## Claims

1. A method of assembling a module frame for assembly as part of a larger structure with a generally flat shape, the module frame (82) comprising a pair of horizontal and parallel main beams (64), a pair of beam members (65) connected to and extending between the main beams and a connector (7) connected to at least one end of each main beam and/or each beam member, the method comprising supporting the components (64, 65) of the module frame (82), whilst welded together, on a support device (12) in a predetermined position, retaining two or more connectors (7) on respective connector support brackets (21, 33) forming part of the support device (12), positioning the connector support brackets (21, 33) so that they are in predetermined positions with respect to one another adjacent respective ends of the said components (64, 65) and welding the connectors (7) to the said ends.

2. A method of assembling a module frame for assembly as part of a larger structure of three-dimensional shape on which fittings are to be mounted, the module frame (1) comprising a pair of horizontal and parallel main beams (2), a pair of beam members (3) connected to and extending between the main beams, a support column (6) extending vertically from each junction of the main beams with the beam members and a connector (7) connected to at least one end of each main beam and/or each beam member and/or each support column, the method comprising supporting the components (2, 3, 6) of the module frame (1), whilst welded together, on a support device (12) in a predetermined position, retaining two or more connectors (7) on respective connector support brackets (21, 33) forming part of the support device (12), positioning the connector support brackets (21, 33) so that they are in predetermined positions with respect to one another adjacent respective ends of the said components (2, 3, 6) and welding the connectors (7) to the said ends.

3. A method of assembling a module frame for assembly as part of a larger structure of three-dimensional shape on which fittings are to be mounted, the module frame (75) comprising a horizontal and substantially rectangular floor member (74), a support column (66) extending vertically from each corner of the floor member and a connector (7) connected to at least one end of each support column, the method comprising supporting the components (74, 66) of the module frame (75), whilst welded together, on a support device (12) in a predetermined position, retaining two or more connectors (7) on respective connector support brackets (21, 33) forming part of the support device (12), positioning the connector support brackets (21, 33) so that they are in predetermined positions with respect to one another adjacent respective ends of the support columns (66) and welding the connectors (7) to the said ends.

4. A method as claimed in any one of Claims 1 to 3 which comprises positioning the said components (64, 65; 2, 3, 6; 74, 66) with respect to one another, welding them together, removing weld distortion of the welded portions and subsequently connecting the connectors (7) to at least some of the said components.

5. A modular structure comprising a plurality of frame modules assembled by a method as claimed in any one of the preceding claims connected together by means of their connectors (7), the connectors (7) of each frame module being in predetermined positions with respect to one another, the modular structure being accommodated within a larger structure, such as a ship's engine room, and at least one of the frame modules (1) being connected to the larger structure by a coupler comprising two elbow plates (52, 53) connected to the frame module (1) and the larger structure, respectively, and two further plates (54) connected to opposite sides of the elbow plates by bolts (55, 56) which pass through holes (59, 60, 61, 62), at least some of which are optionally in the form of elongate slots.

6. A modular structure comprising a plurality of frame modules assembled by a method as claimed in any one of Claims 1 to 4 connected together by means of their connectors (7), the connectors (7) of each frame module being in predetermined positions with respect to one another, the modular structure being accommodated within a larger structure, such as a ship's engine room, and at least one of the frame modules (1) being connected to the larger structure by a coupler comprising a guide rail (91) which is secured to the larger structure and serves to reinforce it.

## Patentansprüche

1. Verfahren zum Zusammenbauen eines Modulrahmens zum Zusammenbau als Teil einer größeren Struktur mit einer im wesentlichen flachen Form, wobei der Modulrahmen (82) ein Paar von horizontalen und parallelen Hauptträgern (64), ein Paar von mit den Hauptträgern verbundenen und sich zwischen diesen erstreckenden Trägerbauteilen (65) sowie einen mit wenigstens einem Ende jedes Hauptträgers und/oder jedes Trägerbauteiles verbundenen Verbinder (7) aufweist, umfassend die folgenden Schritte:
Lagern der Komponenten (64, 65) des Modulrahmens (82) auf einer Lagervorrichtung (12) in einer vorbestimmten Position während des Zusammenschweißens,
Halten von zwei oder mehreren Verbindern (7) auf entsprechenden Verbinder-Halteklammern (21, 33), die einen Teil der Lagervorrichtung (12) bilden,
Positionieren der Verbinder-Halteklammern (21, 33), so daß sie sich in vorbestimmten Positionen zueinander befinden, anschließend an entsprechende Enden der Komponenten (64, 65), und Anschweißen der Verbinder (7) an diese Enden.

2. Verfahren zum Zusammenbauen eines Modulrahmens zum Zusammenbau als Teil einer größeren Struktur mit einer dreidimensionalen Form, an der Ausrüstungsteile zu befestigen sind, wobei der Modulrahmen (1) ein Paar von horizontalen und parallelen Hauptträgern (2), ein Paar von mit den Hauptträgern verbundenen und sich zwischen diesen erstreckenden Trägerbauteilen (3), eine sich vertikal von jeder Verbindung der Hauptträger mit den Trägerbauteilen erstreckende Tragesäule (6) sowie einen mit wenigstens einem Ende jedes Hauptträgers und/oder jedes Trägerbauteiles und/oder jeder Tragesäule verbundenen Verbinder (7) aufweist, umfassend die folgenden Schritte:
Lagern der Komponenten (2,3,6) des Modulrahmens (1) auf einer Lagervorrichtung (12) in einer vorbestimmten Position während des Zusammenschweißens,
Halten von zwei oder mehreren Verbindern (7) auf entsprechenden Verbinder-Halteklammern (21, 33), die einen Teil der Lagervorrichtung (12) bilden,
Positionieren der Verbinder-Halteklammern (21, 33), so daß sie sich in vorbestimmten Positionen zueinander befinden, anschließend an entsprechende Enden der Komponenten (2, 3, 6), und Anschweißen der Verbinder (7) an diese Enden.

3. Verfahren zum Zusammenbauen eines Modulrahmens zum Zusammenbau als Teil einer größeren Struktur mit einer dreidimensionalen Form, an der Ausrüstungsteile zu befestigen sind, wobei der Modulrahmen (75) ein horizontales und im wesentlichen rechteckiges Bodenbauteil (74), eine sich vertikal von jeder Ecke des Bodenbauteiles erstreckende Tragesäule (66) sowie einen mit wenigstens einem Ende jeder Tragesäule verbundenen Verbinder (7) aufweist, umfassend die folgenden Schritte:
Lagern der Komponenten (74, 66) des Modulrahmens (75) auf einer Lagervorrichtung (12) in einer vorbestimmten Position während des Zusammenschweißens,
Halten von zwei oder mehreren Verbindern (7) auf entsprechenden Verbinder-Halteklammern (21, 33), die einen Teil der Lagervorrichtung (12) bilden,
Positionieren der Verbinder-Halteklammern (21, 33), so daß sie sich in vorbestimmten Positionen zueinander befinden, anschließend an entsprechende Enden der Tragesäulen (66), und Anschweißen der Verbinder (7) an diese Enden.

4. Verfahren nach einem der Ansprüche 1 bis 3, umfassend die folgenden Schritte: Positionieren der Komponenten (64, 65; 2, 3, 6; 74, 66) zueinander, sie Zusammenschweißen, Entfernen von Schweißverzug der geschweißten Abschnitte und anschließend Verbinden der Verbinder (7) mit wenigstens einigen der Komponenten.

5. Modulare Struktur, umfassend eine Mehrzahl von nach einem Verfahren nach einem der vorhergehenden Ansprüche zusammengebauten Rahmenmodulen, die miteinander mittels ihrer Verbinder (7) verbunden sind, wobei sich die Verbinder (7) jedes Rahmenmodules in vorbestimmten Positionen zueinander befinden und die modulare Struktur in einer größeren Struktur, etwa dem Maschinenraum eines Schiffes, aufgenommen ist, und wobei wenigstens eines der Rahmenmodule (1) über einen zwei mit dem Rahmenmodul (1) bzw. der größeren Struktur verbundene Winkelplatten sowie zwei weitere, über Bolzen (55, 56), welche durch Löcher (59, 60, 61, 62) reichen, von denen wenigstens einige wahlweise die Form von länglichen Schlitzen aufweisen können, mit gegenüberliegenden Seiten der Winkelplatten verbundene Platten umfassenden Kuppler mit der größeren Struktur verbunden ist.

6. Modulare Struktur, umfassend eine Mehrzahl von nach einem Verfahren nach einem der Ansprüche 1 bis 4 zusammengebauten Rahmenmodulen, die miteinander mittels ihrer Verbinder (7) verbunden sind, wobei sich die Verbinder (7) jedes Rahmenmodules in vorbestimmten Positionen zueinander befinden und die modulare Struktur in einer größeren Struktur, etwa dem Maschinenraum eines Schiffes, aufgenommen ist, und wobei wenigstens eines der Rahmenmodule (1) über einen eine Führungsschiene (91), die mit der größeren Struktur verbunden ist und dazu dient, sie zu verstärken, umfassenden Kuppler mit der größeren Struktur verbunden ist.

## Revendications

1. Procédé d'assemblage d'un bâti modulaire destiné à être assemblé comme partie d'une structure plus grande de forme généralement plate, le bâti modulaire (82) comprenant une paire de poutres maîtresses (64) horizontales et parallèles, une paire de traverses (65) reliées à et s'étendant entre les poutres maîtresses, et une pièce de liaison (7) reliée à au moins une extrémité de chaque poutre maîtresse et/ou de chaque traverse, le procédé comprenant les étapes consistant à supporter les composants (64, 65) du bâti modulaire (82), tandis qu'ils sont soudés, sur un dispositif de support (12) en une position prédéterminée, à retenir deux ou plusieurs pièces de liaison (7) sur des pattes de support de pièce de liaison respectives (21, 33) formant partie du dispositif de support (12), à positionner les pattes de support de pièce de liaison (21, 33) de façon qu'elles se trouvent en des positions prédéterminées les unes par rapport aux autres à proximité immédiate d'extrémités respectives desdits composants (64, 65) et à souder les pièces de liaison (7) sur lesdites extrémités.

2. Procédé d'assemblage d'un bâti modulaire destiné à être assemblé comme partie d'une structure plus grande de forme tridimensionnelle sur laquelle doivent être montées des installations, le bâti modulaire (1) comprenant une paire de poutres maîtresses (2) horizontales et parallèles, une paire de traverses (3) reliées à et s'étendant entre les poutres maîtresses, un pilier de soutien (6) s'étendant verticalement à partir de chaque jonction des poutres maîtresses avec les traverses, et une pièce de liaison (7) reliée à au moins une extrémité de chaque poutre maîtresse et/ou de chaque traverse et/ou de chaque pilier de soutien, le procédé comprenant les étapes consistant à supporter les composants (2, 3, 6) du bâti modulaire (1), tandis qu'ils sont soudés, sur un dispositif de support (12) en une position prédéterminée, à retenir deux ou plusieurs pièces de liaison (7) sur des pattes de support de pièce de liaison respectives (21, 33) formant partie du dispositif de support (12), à positionner les pattes de support de pièce de liaison (21, 33) de façon qu'elles se trouvent en des positions prédéterminées les unes par rapport aux autres à proximité immédiate d'extrémités respectives desdits composants (2, 3, 6), et à souder les pièces de liaison (7) sur lesdites extrémités.

3. Procédé d'assemblage d'un bâti modulaire destiné à être assemblé comme partie d'une structure plus grande de forme tridimensionnelle sur laquelle doivent être montées des installations, le bâti modulaire (75) comprenant un élément de plancher horizontal et sensiblement rectangulaire (74), un pilier de soutien (66) s'étendant verticalement à partir de chaque coin de l'élément de plancher, et une pièce de liaison (7) reliée à au moins une extrémité de chaque pilier de soutien, le procédé comprenant les étapes consistant à supporter les composants (74, 66) du bâti modulaire (75), tandis qu'ils sont soudés, sur un dispositif de support (12) en une position prédéterminée, à retenir deux ou plusieurs pièces de liaison (7) sur des pattes de support de pièce de liaison respectives (21, 33) formant partie du dispositif de support (12), à positionner les pattes de support de pièce de liaison (21, 33) de façon qu'elles se trouvent en des positions prédéterminées les unes par rapport aux autres à proximité immédiate d'extrémités respectives des piliers de soutien (66) et à souder les pièces de liaison (7) sur lesdites extrémités.

4. Procédé selon l'une quelconque des revendications 1 à 3, qui comprend les étapes consistant à positionner lesdits composants (64, 65 ; 2, 3, 6 ; 74, 66) les uns par rapport aux autres, à les souder ensemble, à supprimer la déformation due au soudage des parties soudées et à raccorder ensuite les pièces de liaison (7) à au moins quelques uns desdits composants.

5. Structure modulaire comprenant une pluralité de bâtis modulaires assemblés par un procédé selon l'une quelconque des revendications précédentes, reliés les uns aux autres au moyen de leurs pièces de liaison (7), les pièces de liaison (7) de chaque bâti modulaire étant en des positions prédéterminées les unes par rapport aux autres, la structure modulaire étant logée à l'intérieur d'une structure plus grande, telle que la salle des machines d'un navire, et au moins l'un des bâtis modulaires (1) étant raccordé à la structure plus grande par une pièce d'accouplement comprenant deux plaques articulées (52, 53) reliées au bâti modulaire (1) et à la structure plus grande, respectivement, et deux autres plaques (54) reliées aux côtés opposés des plaques articulées par des boulons (55, 56) qui passent au travers de trous (59, 60, 61, 62), dont certains au moins sont éventuellement en forme de fentes allongées.

6. Structure modulaire comprenant une pluralité de bâtis modulaires assemblés par un procédé selon l'une quelconque des revendications 1 à 4, reliés les uns aux autres au moyen de leurs pièces de liaison (7), les pièces de liaison (7) de chaque bâti modulaire étant en des positions prédéterminées les unes par rapport aux autres, la structure modulaire étant logée à l'intérieur d'une structure plus grande, telle que la salle des machines d'un navire, et l'un au moins des bâtis modulaires (1) étant raccordé à la structure plus grande par une pièce d'accouplement comprenant un rail de guidage (91) qui est fixé à la structure plus grande et sert à la renforcer.
